# EUROPÄISCHE PATENTANMELDUNG

(11) **EP 3 379 696 A1**
(43) Veröffentlichungstag der Anmeldung: **26.09.2018**
(21) Anmeldenummer: 17162103.0
(22) Anmeldetag: 21.03.2017
(51) Int. Cl.: H02K 1/27, H02K 1/32, H02K 9/06

(54) **SYNCHRONE RELUKTANZMASCHINE**

(71) Anmelder: Siemens Aktiengesellschaft, 80333 München (DE)
(72) Erfinder: Zeichfüßl, Roland, 94099 Ruhstorf a. d. Rott (DE)

(57) **Zusammenfassung**

Die Erfindung betrifft eine synchrone Reluktanzmaschine (20), insbesondere Motor oder Generator mit einer Leistung größer 300kW, mit einem Stator (1) und einem durch einen Luftspalt (19) beabstandeten, um eine Achse (18) drehbar gelagerten Rotor (3), dessen axial hintereinander angeordneten Bleche jeweils eine anisotropische magnetische Struktur aufweisen, die durch Flusssperrabschnitte (14,15,16) und Flussleitabschnitte (8) gebildet ist und wobei die Flusssperrabschnitte (14,15, 16) und Flussleitabschnitte (8) Pole des Rotors (3) bilden, wobei diese Flusssperrabschnitte (14,15,16) axial verlaufende Kanäle bilden, wobei in zumindest einigen Flusssperrabschnitten (14,15,16) Permanentmagnete vorgesehen sind, die den jeweiligen Flusssperrabschnitt (14,15,16) nicht komplett belegen und somit in allen Flusssperrabschnitten (14,15,16) eine axiale Luftströmung ermöglichen, wobei das Blechpaket des Rotors (3) axial in zumindest zwei Teilblechpakete (30,31,32, 33) unterteilt ist, wobei in Umfangsrichtung betrachtet jeweils zwischen den Polen im Bereich der q-Achse und axial betrachtet zwischen den Teilblechpaketen (30,31,32,33) radiale Kühlspalte (6) vorhanden sind.

## Beschreibung

Die Erfindung betrifft eine synchrone Reluktanzmaschine, insbesondere einen Motor oder einen Generator einer Windkraftanlage mit einem Stator und einem durch einen Luftspalt beabstandet um eine Achse drehbar gelagerten Rotor, der eine anisotrope magnetische Struktur aufweist, die durch im wesentlichen axial hintereinander angeordnete Flusssperrabschnitte gebildet ist.

Die Erfindung betrifft ebenso eine Windkraftanlage mit einem derart ausgeführten Generator.

Als dynamoelektrische Maschinen, also Motoren oder Generatoren mit Leistungen ab einigen 100kW werden in der Regel Asynchronmaschinen mit Käfigläufern oder Synchronmaschinen eingesetzt. Diese Maschinen weisen jedoch einen aufwändig herzustellenden Rotor mit einem Kurzschlusskäfig bzw. einer Polwicklung auf.

Maschinen in dieser Leistungsklasse benötigen im Allgemeinen eine Kühlung des Rotors, da die dort entstehenden Verluste nicht mehr allein durch Konvektionen abführbar sind. Somit erfolgt die Kühlung des Rotors üblicherweise durch Kühlluft, die durch Eigenbelüftung oder Fremdbelüftung erzeugt wird. Außerdem muss auch der Stator einer derartigen Maschine über die gesamte axiale Länge gleichmäßig mit Kühlluft versorgt werden. Bei diesen oben beschriebenen Maschinen wird häufig ein hoher Leistungsfaktor gefordert, um den Anteil an Blindleistung, der zum Betrieb der Maschine zur Verfügung gestellt werden muss, zu minimieren.

Bei dynamoelektrischen Maschinen dieser Leistungsklasse werden im Wesentlichen zwei Arten der primären Kühlung mit Luft unterschieden. Zum einen gibt es Maschinen, die nur in axialer Richtung von Luft durchströmt werden, wie dies beispielsweise die DE 10 2009 051 651 B4 beschreibt. Dort ist ein derartiger Kreislauf mit einer Wassermantelkühlung des Blechpakets des Stators kombiniert.

Des Weiteren gibt es dynamoelektrische Maschine, bei denen die Kühlluft auch radial durch die Maschine im speziellen durch den Stator strömt. Um dies zu ermöglichen, werden Stator- und Rotorblechpakete durch radiale Kühlschlitze unterbrochen. Dadurch kann die angeströmte Oberfläche des Luftstroms wesentlich vergrößert werden.

So beschreibt die DE 10 2012 210 120 A1 eine dynamoelektrische Maschine mit radialen Kühlschlitzen in Stator und Rotor und einem separaten Kühlkreislauf für die Wickelköpfe.

In der EP 2 403 115 A1 ist ein Konzept mit radialen Kühlschlitzen für eine permanenterregte Synchronmaschine dargestellt.

Eine synchrone Reluktanzmaschine weist im Vergleich zu den zuvor genannten Maschinen den Nachteil auf, dass der Leistungsfaktor verhältnismäßig gering ist und bei ca. 0,7 bis 0,75 liegt. Aus diesem Grund findet dieser Maschinentyp vor allem in der Leistungsklasse ab einigen 100kW nahezu keine Anwendungen.

In der EP 2 589 132 B1 wird beispielsweise die Kühlung einer Reluktanzmaschine kleinerer Größe und Leistung beschrieben. Die Kühlluft strömt bei dieser Anordnung axial durch Flussbarrieren des Rotors. Der Stator ist in axialer Richtung vollständig geschichtet.

Für Maschinen größerer Leistung ist diese Kühlung u.a. nicht geeignet, da das Verhältnis von Volumen zu Oberfläche zu gering ist und somit keine ausreichende Kühloberfläche zur Verfügung steht.

Ausgehend davon liegt der Erfindung die Aufgabe zugrunde, eine synchrone Reluktanzmaschine, insbesondere für eine höhere Leistungsklasse ab einigen 100kW zu schaffen, die bei ausreichender Kühlung einen vergleichsweise hohen Leistungsfaktor bei unterschiedlichen Belastungen bereitstellt. Des Weiteren soll die synchrone Reluktanzmaschine für den Einsatz bei Windkraftanlagen geeignet sein.

Die Lösung der gestellten Aufgabe gelingt durch eine synchrone Reluktanzmaschine, insbesondere Motor oder Generator mit einer Leistung größer 300kW, mit einem Stator und einem durch einen Luftspalt beabstandeten, um eine Achse drehbar gelagerten Rotor, dessen axial hintereinander angeordneten Bleche jeweils eine anisotropische magnetische Struktur aufweisen, die durch Flusssperrabschnitte und Flussleitabschnitte gebildet ist und wobei die Flusssperrabschnitte und Flussleitabschnitte Pole des Rotors bilden, wobei diese Flusssperrabschnitte axial verlaufende Kanäle bilden, wobei in zumindest einigen Flusssperrabschnitten Permanentmagnete vorgesehen sind, die den jeweiligen Flusssperrabschnitt nicht komplett belegen und somit in allen Flusssperrabschnitten eine axiale Luftströmung ermöglichen, wobei das Blechpaket des Rotors axial in zumindest zwei Teilblechpakete unterteilt ist, wobei in Umfangsrichtung betrachtet jeweils zwischen den Polen im Bereich der q-Achse und axial betrachtet zwischen den Teilblechpaketen radiale Kühlspalte vorhanden sind.

Durch den erfindungsgemäßen Aufbau der synchronen Reluktanzmaschine mit Permanentmagneten in Flusssperren wird nunmehr der Leistungsfaktor bei unterschiedlichen Betriebspunkten erhöht, als auch die Kühlung verbessert. Außerdem vergrößert sich der Unterschied der Induktivität zwischen der d- und q-Achse des Rotors der synchronen Reluktanzmaschine, was letztlich den Leistungsfaktor der synchronen Reluktanzmaschine verbessert. Durch den erhöhten Leistungsfaktor wird auch das erreichbare Drehmoment vergrößert.

Die Permanentmagnete erstrecken sich nur über einen Teil der Flusssperren, so dass in den verbleibenden Bereichen dieser mit Permanentmagneten versehenen Flusssperren eine axiale Strömung von Kühlluft ermöglicht ist.

In einer Leistungsklasse ab 300kW ist dabei ein Leistungsfaktor von ca. 0,8 oder größer möglich. Der Anteil an Blindleistung, der zum Betrieb der Maschine zur Verfügung gestellt werden muss, kann somit verringert werden, was besonders bei Umrichtern der Generatoren von Windkraftanlagen von Vorteil ist.

Der Rotor weist also in axialer Richtung betrachtet zumindest zwei Teilblechpakete auf, zwischen denen radiale Kühlspalte vorhanden sind. Jeder Flusssperrabschnitt weist also innerhalb seines axialen Verlaufs im Rotor zumindest einen radialen Kühlspalt auf.

Vorteilhafterweise werden die Zwischenelemente als magnetisch leitfähige Teile ausgebildet, so dass auch in diesen Abschnitten ein zusätzlicher magnetischer Fluss im Rotor geführt werden kann. Auch dadurch erhöht sich die Induktivität in der d-Achse. Diese Zwischenelemente als magnetisch leitfähige Teile werden vorteilhafterweise mit denselben Werkzeugen, z.B. Stanzwerkzeugen, hergestellt, wie die weiteren Bleche des Rotors. Sie sind in diesem Fall auch geblecht ausgeführt. Durch zusätzliche Bearbeitungsschritte an den Zwischenelementen z.B. Stanzen oder Schneiden können zusätzliche Optionen, größere Aussparungen, Abstandshalter, Elemente mit Lüfterwirkung in diesen Blechen vorgesehen werden.

Die magnetisch leitfähigen Teile der Zwischenelemente können jedoch nicht nur geblecht, sondern auch als massive Teile ausgeführt werden. Dies ist insbesondere dann von Vorteil, wenn die magnetisch leitfähigen Teile nicht mehr bis zum Luftspalt der synchronen Reluktanzmaschine reichen, da vor allem an der Oberfläche des Rotors mit Wirbelstromverlusten gerechnet werden muss.

Das Blechpaket des Rotors ist zumindest im Bereich der d-Achse axial durchgehend ausgeführt. Flankierende Flusssperren der d-Achse sind je nach axialer Position im Blechpaket des Reluktanzläufer zusätzlich vorhanden.

In weiteren Ausführungen kann dabei im Bereich der Kühlspalte die radiale Erstreckung der Zwischenelemente, also der Bleche der d-Achse radial reduziert ausgeführt sein, um Wirbelstromverluste zu reduzieren. Dabei orientiert sich die radiale Reduzierung der Zwischenelemente an der radialen Tiefe der jeweiligen Flusssperre.

Vorteilhafterweise kann der Unterschied in den Induktivitäten von d- und q-Achse des Rotors zusätzlich vergrößert werden, wenn das Blechpaket des Rotors axial um ca. 10% länger als das des Stators ausgeführt ist. Dadurch tritt eine weitere Verbesserung des Leistungsfaktors ein.

Ein nunmehr axial geführter Kühlluftstrom, der in den Rotor eintritt, wird je nach Flusssperrabschnitten ggf. auch an den Permanentmagneten vorbei geleitet und in radiale Kühlkanäle komplett oder zumindest zum Teil radial umgelenkt. Diese Schottelemente können beispielsweise aus einem oder mehreren einzelnen Blech ausgeführt sein, die vorzugsweise magnetisch nicht leitfähig sind, Sie sind deshalb auch nicht mit Permanentmagneten versehen. Damit werden die Streuverluste reduziert.

Alternativ dazu können diese Schottelemente auch als Bleche mit Aussparungen mit einem Verschluss der Flusssperrabschnitte versehen werden, der vorzugsweise wiederum aus magnetisch nicht leitfähigem Material, wie z.B. Kunststoff besteht.

Ein über die jeweiligen Flusssperrabschnitte axial in den Rotor eingetretene Kühlluftstrom, wird anschließend - je nach Position des Flusssperrabschnitts radial in Richtung Luftspalt der synchronen Reluktanzmaschine umgelenkt. Danach tritt dieser Kühlluftstrom in radiale Kühlschlitze des Stators ein und an der Rückseite des Statorblechpakets wieder aus.

In einer Ausführungsform sind die radialen Kühlschlitze des Stators zumindest zum Teil über den radialen Kühlschlitzen des Rotors angeordnet.

In einer weiteren Ausführungsform sind die radialen Kühlschlitze des Stators auf jeden Fall nicht über den Kühlschlitzen des Rotors angeordnet. Sie befinden sich somit an unterschiedlichen axialen Positionen.

Somit wird nunmehr sowohl der Rotor als auch das Blechpaket des Stators effizient gekühlt. Am Rücken des Statorblechpakets, also auf der Außenseite des Stators - falls die synchrone Reluktanzmaschine als Innenläufer ausgeführt ist - kann die Kühlluft gesammelt werden und einem oder beiden abluftseitigen Wickelköpfen zugeführt werden, wobei auf den Weg dorthin und/oder danach eine Rückkühlung des aufgewärmten Kühlluftstromes mittels eines Wärmetauschers erfolgt.

Grundsätzlich ist es bei dieser erfindungsgemäßen Reluktanzmaschine vorteilhaft, wenn zumindest ein Teil der vom Wärmetauscher rückgekühlten Kühlluft direkt zum Rotor und damit auch zu den Permanentmagneten geleitet wird. Damit wird vorzeitige Erwärmung dieser rückgekühlten Kühlluft durch die Verluste des Stators vermieden. Die Permanentmagnete werden dadurch optimal gekühlt, was die Effizienz dieser Reluktanzmaschine weiter erhöht.

Die Erfindung sowie weitere vorteilhafte Ausgestaltungen der Erfindung werden anhand prinzipiell dargestellter Ausführungsbeispiele näher erläutert. Dabei zeigen:
- FIG 1: einen Teillängsschnitt einer synchronen Reluktanzmaschine,
- FIG 2: einen Teillängsschnitt einer weiteren synchronen Reluktanzmaschine,
- FIG 3 bis 12: Blechschnitte der Teilblechpakete des Rotors mit Bestückung von Permanentmagneten,
- FIG 13 bis 15: Blechschnitte der Zwischenelemente des Rotors,
- FIG 16 bis 18: Blechschnitte der Zwischenelemente des Rotors mit Lüfterflügeln,
- FIG 19 bis 21: Blechschnitte der Schottelemente des Rotors,
- FIG 22 bis 24: Blechschnitte der Schottelemente des Rotors mit Verschlüssen,
- FIG 25 bis 26: Blechschnitte der Schottelemente des Rotors mit verjüngten Öffnungen,
- FIG 27 bis 29: Blechschnitte der Schottelemente des Rotors mit Teilöffnungen,
- FIG 30 bis 31: Blechschnitte der Teilblechpakete mit Versteifung.

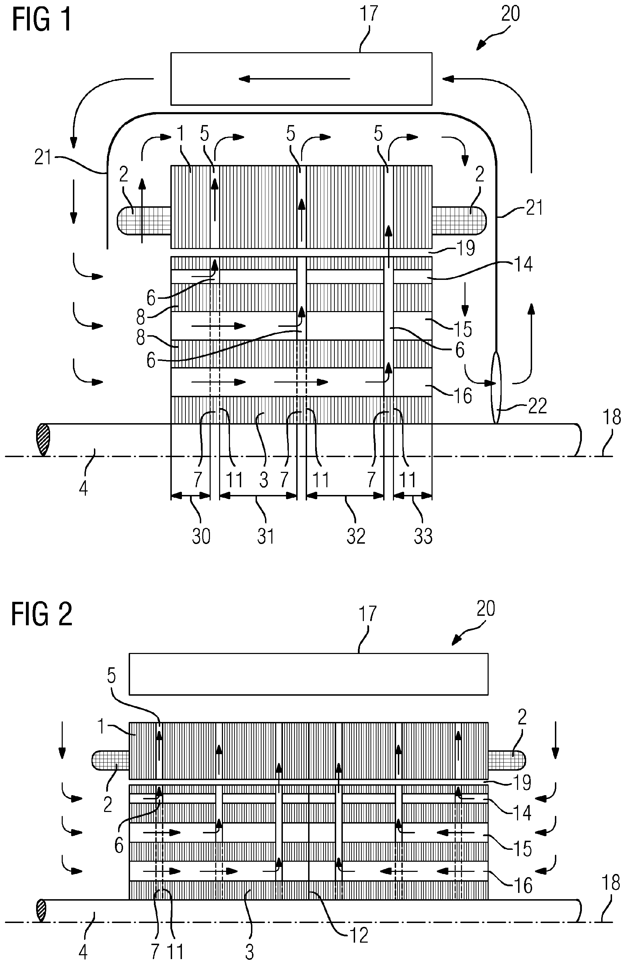

FIG 1 zeigt in einem Teillängsschnitt eine synchrone Reluktanzmaschine 20 mit einem Stator 1, der an seinen axialen Stirnseiten jeweils einen Wickelkopf 2 aufweist, die jeweils zu einem nicht näher dargestellten Wicklungssystem gehören, das in im Wesentlichen axial verlaufenden Nuten des Stators 1 eingebettet ist.

Durch einen Luftspalt 19 ist der Stator 1 von einem Rotor 3 beabstandet, wobei der Rotor 3 mit einer Welle 4 drehfest verbunden ist und um eine Achse 18 drehbar gelagert ist.

Der Rotor 3 ist als vierpoliger Reluktanzläufer ausgeführt, wobei durch Flusssperrabschnitte 14, 15, 16 und dazwischen vorhandene Flussleitabschnitte 8 in Umfangsrichtung betrachtet vier Pole gebildet sind. In diesem Ausführungsbeispiel sind in radialer Richtung betrachtet drei Flusssperrabschnitte 14, 15, 16 vorhanden.

Der erfindungsgemäße Gedanke ist nicht auf vierpolige synchronen Reluktanzmaschine 20 beschränkt sondern ist auch auf zweipolige, sechspolige, achtpolige etc. übertragbar.

Im Stator 1, der als Blechpaket ausgebildet ist, befinden sich axiale und/oder insbesondere radiale Kühlkanäle 5, die gemäß diesem Ausführungsbeispiel mit radialen Kühlkanälen 6 bzw. Kühlspalten des Rotors 3 radial fluchten.

Das radiale Fluchten der Kühlkanäle 6 des Rotors 3 mit den Kühlkanälen 5 des Stators 1 ist vorteilhaft für die Elektromagnetik, da mehr Fluss vom Rotors 3 zum Stator 1 übertragen wird.

Das axiale Versetzen der Kühlkanäle 6 des Rotors 3 bzgl. den Kühlkanälen 5 des Stators 1 führt zu einer verbesserten Kühlung der gesamten Reluktanzmaschine bei gleichzeitiger Reduzierung der Luftgeräusche.

Durch die radialen Kühlkanäle 6 des Rotors werden Teilblechpakete 30, 31, 32, 33 des Rotors 3 geschaffen, die jeweils durch Zwischenelemente 7 zumindest im Bereich der q-Achse voneinander beabstandet sind.

Die radialen Kühlkanäle 5 des Stators 1 und die radialen Kühlkanäle 6 des Rotors 3 unterscheiden sich in Anzahl und axialer Positionierung im axialen Verlauf des jeweiligen Blechpaketes von Stator 1 und Rotor 3. Das radiale Fluchten der Kühlkanäle 5, 6 tritt entweder gar nicht, bei allen oder lediglich bei einigen vorgegebenen Kühlkanälen 5,6 ein.

Die Flusssperrabschnitte 14, 15, 16 bilden im Wesentlichen axial verlaufende Kühlkanäle, durch die ein Kühlluftstrom geführt werden kann. In diesen Flusssperrabschnitte 14, 15, 16 sind, wie später noch gezeigt, Permanentmagnete 22 angeordnet, die aber dennoch eine axiale Kühlluftströmung gestatten, da sie diese Flusssperrabschnitte 14, 15, 16 entweder gar nicht oder nur zum Teil einnehmen.

Durch dementsprechend ausgestaltete Schottelemente 11 kann nunmehr je nach Ausbildung dieser Schottelemente 11 der oberste Flusssperrabschnitt 14 oder der mittlere Flusssperrabschnitt 15 oder der unterste Flusssperrabschnitt 16 in seinem Verlauf des Kühlmittelstroms und Kühlmitteldurchsatz beeinflusst werden. Dabei wird entweder der gesamte in einem der Flusssperrabschnitte 14, 15, 16 befindliche axial verlaufende Kühlluftstrom im Bereich des Zwischenelements 7 umgelenkt und radial über den Luftspalt 19 gegebenenfalls in einen dazu korrespondierenden Kühlkanal 5 des Stators 1 geführt oder es wird nur ein Teil des Kühlluftstroms im Bereich des Zwischenelements 7 radial umgelenkt.

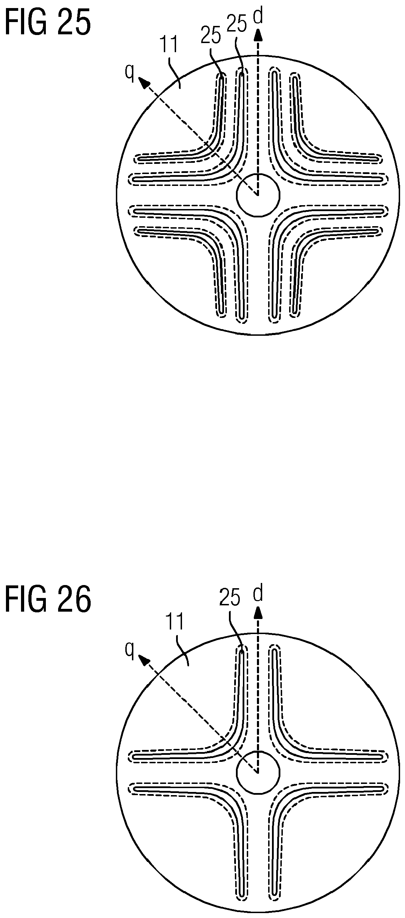

Eine axial verlaufende Flusssperre muss ggf. auch zwei oder mehrere seiner radialen Kühlspalte 6 mit Kühlluft möglichst gleichmäßig "versorgen". Dazu werden die Durchtrittsöffnungen 25, 26 in den Schottelementen 11 gemäß FIG 25, 26 strömungsmäßig dementsprechend dimensioniert, indem pro Flusssperre 11 mehrere Löcher 26 oder eine reduzierte radiale Höhe bzw. Verjüngung 25 der Flusssperre 11 vorgesehen ist.

Vorteilhafterweise sind die Schottelemente 11 auch als Bleche vorzugsweise amagnetisch ausgeführt. Die Zwischenelemente 7 sind als elektromagnetisch leitfähige Teile vorgesehen, um damit auch den magnetisch leitfähigen Teil des Rotors 1, insbesondere im Bereich der d-Achse zu vergrößern, was den Leistungsfaktor der synchronen Reluktanzmaschine 20 zusätzlich verbessert.

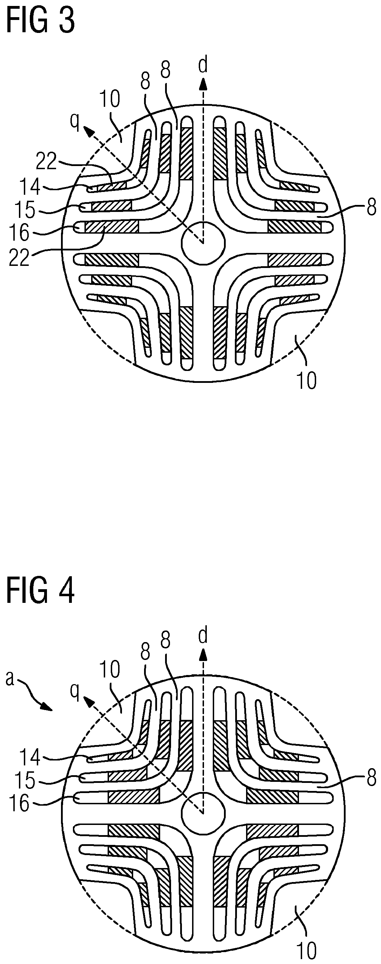

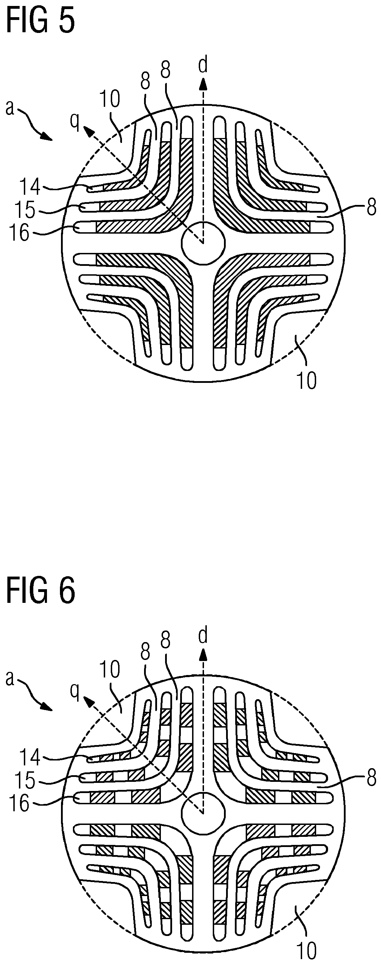

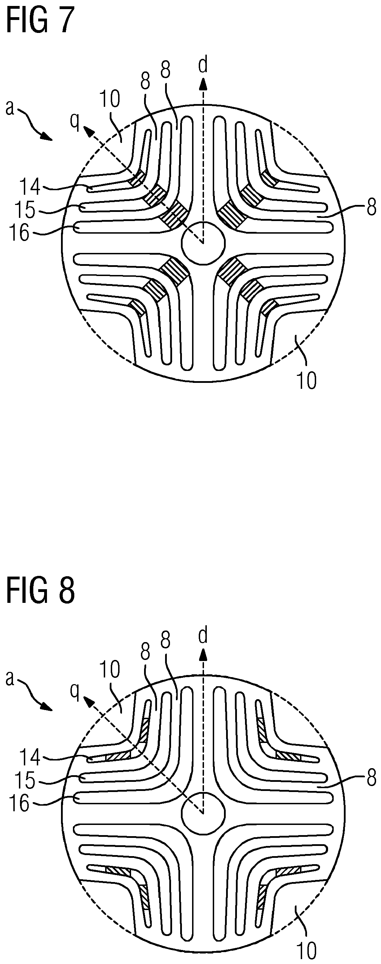

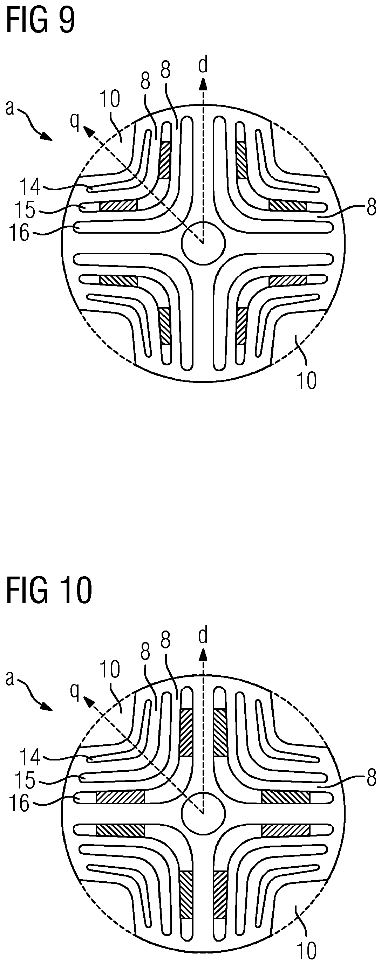

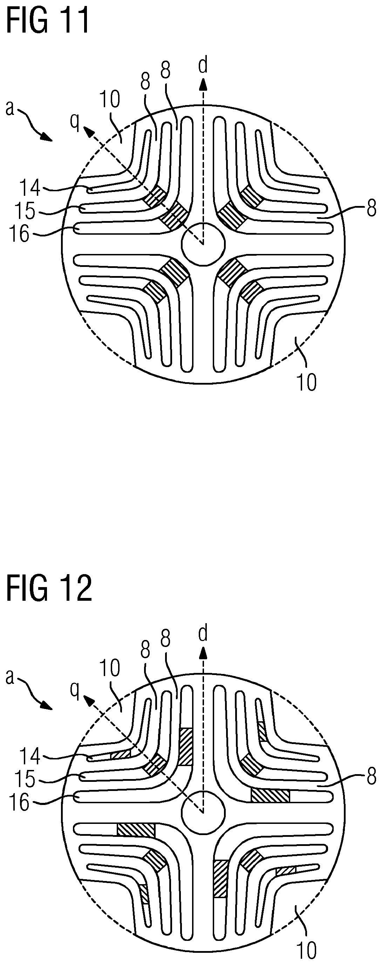

Dabei können auch in den Zwischenelementen 7 Permanentmagnete 22 angeordnet sein, die der jeweiligen Anordnung in den Flusssperrabschnitten 14, 15, 16 gemäß FIG 3 bis 12 entsprechen.

FIG 1 zeigt eine einflutige synchrone Reluktanzmaschine 20, wobei ein Kühlluftstrom nur von einer Seite in die Maschine, insbesondere den Rotor 3 eintritt. Unabhängig davon, ob die Kühlluft nunmehr radial aus dem Stator 1 und/oder axial aus dem Stator und/oder axial aus dem Rotor 3 austritt, kann sich im Anschluss an die Aufheizung in den Blechpaketen des Stators 1 und Rotors 3 ein strömungstechnisch nachgeschalteter Wärmetauscher 17 befinden, der die Kühlluft auf vorgegebene Temperaturwerte rückkühlt. Vorteilhafterweise wird dabei auch ein nicht näher dargestellter Frequenzumrichter rückgekühlt, der ebenfalls durch einen zusätzlichen oder den gleichen Wärmetauscher 17 in seinem Temperaturverhalten beeinflusst werden kann.

Prinzipiell dargestellte Umlenkelemente 21 führen die Kühlluft, optional über einen Lüfter 22 angetrieben, durch den Wärmetauscher 17. Der Wärmetauscher 17 ist nicht zwangsläufig radial über dem Stator 1 angeordnet. Der Wärmetauscher 17 kann sich beispielsweise auch axial an den Stirnseiten der synchronen Reluktanzmaschine 20 befinden.

FIG 2 zeigt eine synchrone Reluktanzmaschine 20, die zweiflutig ausgeführt ist, d.h., sowohl von der einen als auch von der anderen axialen Stirnseite des Rotors 3 tritt ein Kühlluftstrom in den Rotor 3 über die Flusssperrabschnitt 14, 15, 16 ein. Wie oben bei der einflutigen Maschine gemäß FIG 1 ausgeführt, erfolgt die Umlenkung der Kühlluft in den Flusssperrabschnitten 14, 15, 16 aufgrund der konstruktiven Gestaltung in gleicher oder ähnlicher Art und Weise.

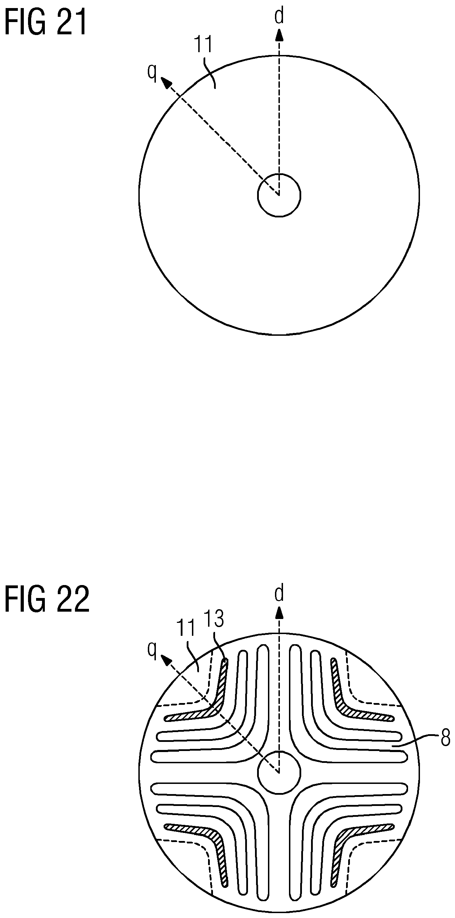

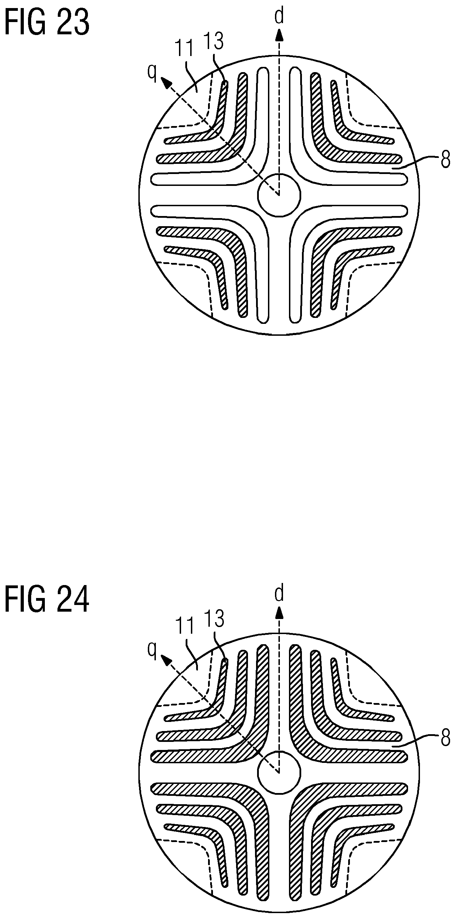

Zur Trennung der beiden aufeinander sich zu bewegenden Kühlluftströme kann ungefähr mittig von Rotor 3 und/oder Rotor 3 und Stator 1 eine Abtrennung in Form einer durchgängigen - vorzugsweise amagnetischen - Trennwand 12 vorgesehen sein. Diese ist bezüglich ihres Querschnitts, wie die Schottelemente 11 gemäß FIG 21 oder FIG 24 ausgeführt. Damit werden die Luftströme auf beiden Seiten der Trennwand 12 voneinander, vorzugsweise strömungsmäßig entkoppelt und eine gleichmäßigere Verteilung der Kühlluft über die gesamte axiale Länge der Maschine geschaffen. Durch die amagnetische Ausführung der Trennwand 12 werden Streuverluste vermieden.

In den FIG 3 bis 12 ist jeweils ein konventionelles Rotorblech dargestellt, das Permanentmagnete 22 in unterschiedlichsten Anordnungen darstellt.

Die Flusssperrabschnitte 14, 15, 16 verlaufen jeweils bogenförmig bzw. schalenförmig und symmetrisch zur jeweiligen q-Achse.

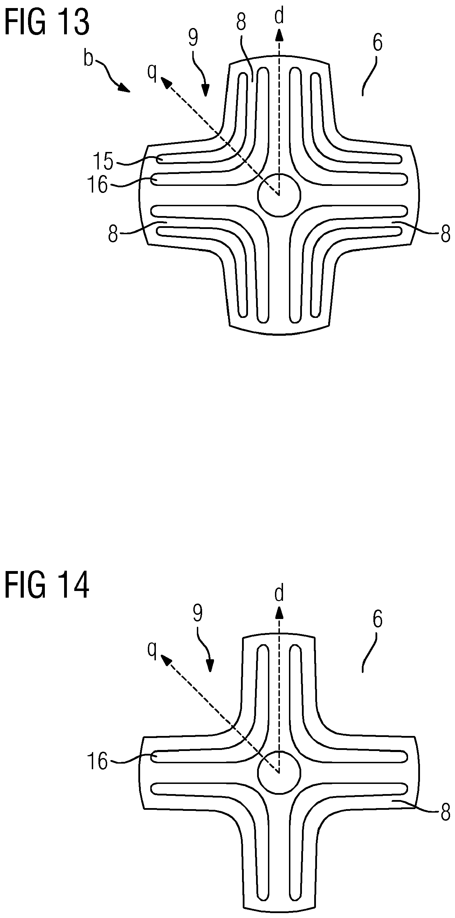

Die Zwischenelemente 7 beinhalten, wie die konventionellen Rotorbleche gemäß FIG 3 bis 12 Aussparungen, die als Flusssperrabschnitte bezeichnet werden und die auch die Luft in axialer Richtung durch den Rotor 3 führen. In vorgegebenen axialen Abständen werden Bleche gemäß der FIG 13 bis FIG 15 vorgesehen, die der Luft in den Flusssperrabschnitten, einen radialen Austritt aus dem jeweiligen Flusssperrabschnitt und dem Rotor 3 ermöglichen. Die dort gezeigten Aussparungen 9 reichen mindestens von einem Flusssperrabschnitt, der als axialer Kühlkanal fungiert, bis zum Außendurchmesser des Rotorblechpakets des Rotors 3, also bis zum Luftspalt 19. Jede Aussparung 9 zwischen zwei d-Achsen bildet in dieser Ausführung einen Kühlkanal 6 - so dass bei einem vierpoligen Reluktanzläufer nach jedem Teilblechpaket vier Kühlspalte 6 vorhanden sind.

Bei einem sechspoligen oder achtpoligen Reluktanzläufer sind es demnach nach jedem Teilblechpaket sechs oder acht Kühlspalte.

Die Aussparung 10 im konventionellen Rotorblech gemäß FIG 3 bis FIG 12 an der Außenseite des Rotors 3 dient ebenfalls als am Rotor 3 außen liegende Flusssperre. Diese optionale Ausführung führt zu einer weiteren Verbesserung des Leistungsfaktors.

Die außen liegende Flusssperre 10 im konventionellen Rotorblech gemäß FIG 3 bis FIG 12 kann Luft, aber auch amagnetisches Material aufweisen, um einen homogenen Luftspalt 19 zu erhalten. Dies reduziert insbesondere bei hochtourige Maschinen die Lärmpegel.

Mittels der magnetisch leitfähigen Zwischenelemente 7 kann nunmehr zusätzlich magnetischer Fluss im Rotor 3 geführt werden. Dadurch erhöht sich die Induktivität in der d-Achse des Rotors 3. Durch die vergleichsweise bessere Leitfähigkeit können nun auch die Flusssperren in ihren geometrischen Abmessungen, insbesondere ihrer radialen Höhe vergleichsweise größer gewählt werden, wodurch sich die Induktivität in der q-Achse senkt. Damit ergibt sich insgesamt ein größerer Unterschied in den Induktivitäten von d- und q-Achse und der Leistungsfaktor der synchronen Reluktanzmaschine 20 wird verbessert.

Eine zusätzliche Verbesserung des Leistungsfaktors tritt durch die Anordnung zumindest eines Permanentmagneten 22 in zumindest einer Flusssperre zumindest eines Teilblechpaketes und/oder Zwischenelements 7 auf.

Die magnetisch leitfähigen Zwischenelemente 7, insbesondere des Rotors 3, können mit denselben Werkzeugen z.B. denselben Stanzwerkzeugen hergestellt werden, wie die weiteren Bleche des Rotors 3. Durch zusätzliche Bearbeitung der Bleche, z.B. zusätzliche Stanzvorgänge oder Schneidvorgänge können auch geeignete größere Aussparungen 9 oder Abstandshalter hergestellt werden. Die magnetisch leitfähigen Zwischenelemente 7 zwischen zwei Teilblechpaketen können nicht nur geblecht, sondern auch als massive einstückige Teile, insbesondere als gesinterte Teile ausgeführt sein.

Um die Wirbelstromverluste in den magnetischen Zwischenelementen 7 zu reduzieren, sind diese ebenfalls geblecht ausgeführt. Die Anzahl und/oder deren axiale Dicke der axial unmittelbar hintereinander angeordneten Zwischenelemente 7 ergibt die axiale Breite des Kühlspaltes 6.

Um den Unterschied der Induktivitäten Lq und L_{d} in der q- und der d-Achse des Rotors 3 zusätzlich zu steigern, wird die axiale Länge des Blechpakets des Rotors 3 größer als die axiale Länge des Blechpakets des Stators 1 gewählt. Als besonders geeignet erwies sich dabei eine 10%-ige Verlängerung des Rotorblechpakets gegenüber dem Statorblechpaket.

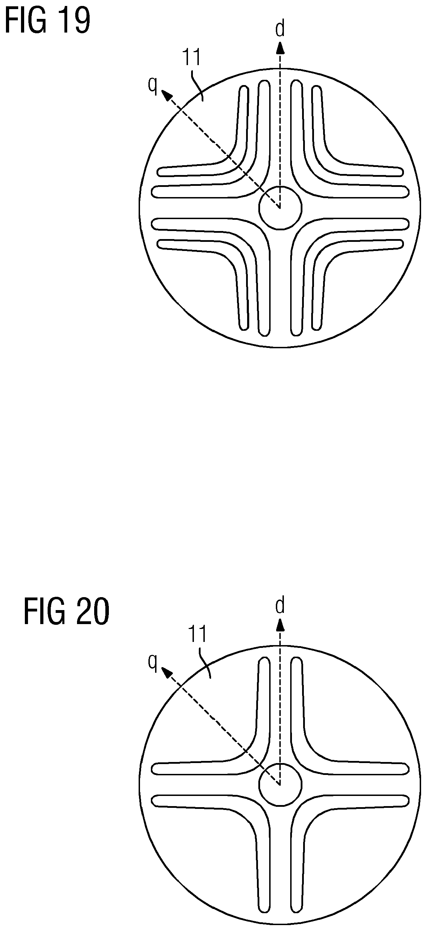

Um nun einen Kühlluftstrom gezielt in die radialen Kühlkanäle 6 des Rotors 3 zu lenken, unabhängig von der Ausführung gemäß der synchronen Reluktanzmaschine 20 nach FIG 1, FIG 2, oder weiterer denkbaren Ausführungen, befinden sich zwischen den konventionellen Blechen des Rotorblechpakets nach FIG 3 bis FIG 12 und den magnetisch leitfähigen Zwischenelementen 7 gemäß FIG 13 bis FIG 15 auch magnetisch nicht leitfähige Schottelemente 11 z.B. gemäß FIG 19 bis FIG 21. Dies Schottelemente 11 bewirken eine radiale Umlenkung zumindest eines Teilluftstromes eines Flusssperrabschnitts 14,15,16 in ihren jeweiligen radialen Kühlkanal 6.

Alternativ zu den Schottelementen 11 gemäß FIG 19 bis FIG 21 können Bleche mit Aussparungen gemäß FIG 3 bis FIG 12 - also magnetisch leitfähige Bleche, aber ohne Permanentmagnete 22 - auch mit einem Verschluss 13 gemäß den FIG 22 bis FIG 24 versehen werden, um als Schottelement 11 zu wirken. Dieser Verschluss 13 besteht vorzugsweise aus magnetisch nicht leitfähigem Material, wie z.B. Kunststoff.

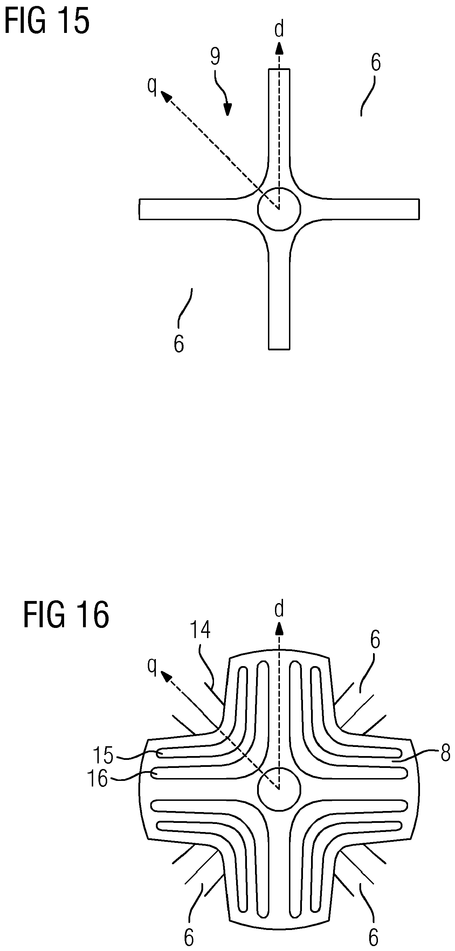

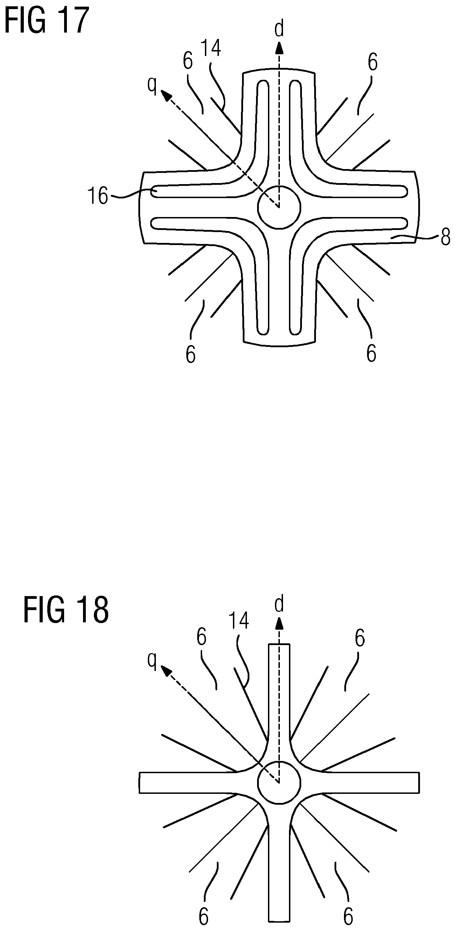

Eine Kühlung des Stators 1 mit seinem Wicklungssystem als auch des Rotors 3 erfolgt nunmehr über radiale Kühlkanäle und/oder axial verlaufende Kühlkanäle und/oder über den Luftspalt 19. Zusätzlich kann durch Einfügen von speziellen Zwischenelementen 7 gemäß FIG 16 bis FIG 18 auch eine zusätzliche Lüfterwirkung des Rotors 3 erzeugt werden. Dies geschieht insbesondere dadurch, dass die Zwischenelemente 7 gemäß FIG 16 bis FIG 18 mit lüfterähnlichen Flügeln 14 ausgeführt sind. Diese Flügel 14 können vorteilhafterweise auch gleichzeitig als axiale Abstandshalter zwischen den Teilblechpaketen 30, 31, 32, 33 des Rotors 3 fungieren.

Pro Reluktanzläufer sind demnach auch Zwischenelementen 7 gemäß FIG 13 bis FIG 15 und/oder nach FIG 16 bis FIG 18 möglich.

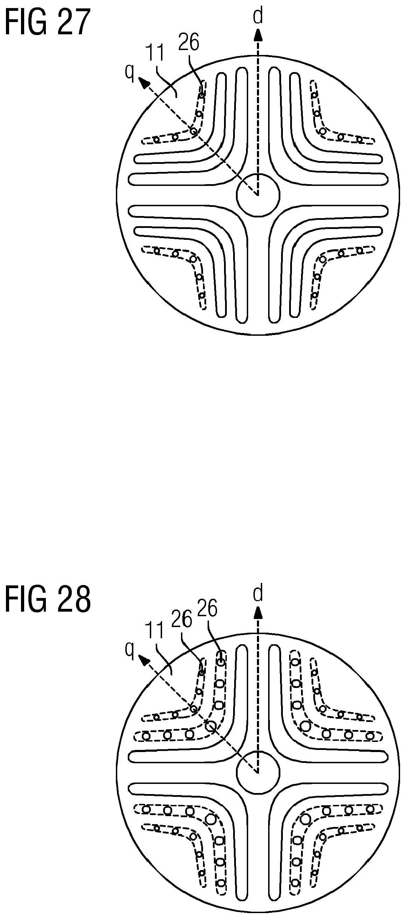

Das Blechpaket des Rotors 3 ist bei einer einflutigen Maschine gemäß FIG 1 nunmehr axial wie folgt aufgebaut. Ein erstes Teilblechpaket 30 ist mit konventionellen Blechen die Permanentmagneten 22 versehen sind nach einem der Ausführungsformen gemäß FIG 3 bis FIG 12 aufgebaut. Danach folgt ein Zwischenelement 7 gemäß FIG 13, das eine vorgegebene axiale Dicke aufweist. Es kann einteilig aber auch geblecht ausgeführt sein. Es ermöglicht dem Kühlluftstrom dieses Flusssperrabschnittes 14 radial nach außen geleitet zu werden. Im weiteren axialen Verlauf schließt sich dann ein Schottelement 11 gemäß FIG 19, FIG 22, FIG 25 oder FIG 27 an, das den Flusssperrabschnitt 14 komplett oder nur zum Teil axial abschließt. Die Flusssperrabschnitte 15 und 16 bleiben in diesem Schottelement 11 axial offen. Von diesen Flusssperrabschnitten 15 und 16 tritt an dieser Stelle keine Luft radial nach außen.

Daran schließt sich axial ein nächstes Teilblechpaket 31 mit konventionellen Blechen mit Permanentmagneten 22 gemäß FIG 3 bis FIG 12 an. Danach folgt ein Zwischenelement 7 gemäß FIG 14, das eine vorgegebene axiale Dicke aufweist. Es kann einteilig aber auch geblecht ausgeführt sein. Es ermöglicht dem Kühlluftstrom dieses Flusssperrabschnittes 15 radial nach außen geleitet zu werden. Es kann auch ein Teilluftstrom des Flusssperrabschnittes 14 hier nach außen gelenkt werden. Von dem Flusssperrabschnitt 16 tritt an dieser Stelle keine Luft radial nach außen.

Im weiteren axialen Verlauf schließt sich dann ein Schottelement 11 gemäß FIG 20, FIG 23, FIG 26 oder FIG 28 an, das den Flusssperrabschnitt 14, 15 komplett oder nur zum Teil axial abschließt. Mindestens der Flusssperrabschnitte 16 bleibt bei diesem Schottelement axial offen.

Daran schließt sich axial ein nächstes Teilblechpaket 32 mit konventionellen Blechen mit Permanentmagneten 22 gemäß einer der FIG 3 bis FIG 12 an. Danach folgt ein Zwischenelement 7 gemäß FIG 15, das eine vorgegebene axiale Dicke aufweist. Es kann einteilig aber auch geblecht ausgeführt sein. Es ermöglicht dem Kühlluftstrom dieses Flusssperrabschnittes 16 radial nach außen geleitet zu werden. Im weiteren axialen Verlauf schließt sich dann ein Schottelement 11 gemäß FIG 21, FIG 24, oder FIG 29 an, das u.a. den Flusssperrabschnitt 16 komplett oder nur zum Teil axial abschließt.

Es kann auch - sofern vorhanden - ein Teilluftstrom der Flusssperrabschnitte 14, 15 hier nach außen gelenkt werden. An dieser Stelle tritt die Luft dieser Flusssperrabschnitte 16 komplett jeweils aus ihrem Kühlkanal 6 aus oder wird zumindest teilweise axial weiter geführt, letztendlich, in diesem Fall axial aus dem Blechpaket des Rotors 3.

Falls die Schottelemente 11 den axialen Luftstrom nur teilweise radial umlenken, kann der in diesem Flusssperrabschnitt verbleibende "Restluftstrom" in den strömungstechnisch nachgeschalteten Schottelementen 11 der anderen Flusssperrabschnitte radial und/oder axial geführt werden.

Das Blechpaket des Rotors 3 dieser Ausführungen ist zumindest im Bereich der d-Achse axial durchgehend ausgeführt. Flankierende Flusssperren 14, 15, 16 der d-Achse sind von der axialen Position im Blechpaket des Reluktanzläufer zusätzlich vorhanden.

Bei einer zweiflutigen Maschine gemäß FIG 2 ist der oben geschriebene Aufbau ausgehend von den beiden Stirnseiten des Rotors 3 bis zur Trennwand 12 und das Kühlprinzip übertragbar. Idealerweise bildet dabei die Trennwand 12 das Schottelement, das die beiden aufeinander zuströmenden Kühlluftströme trennt und radial zum Luftspalt 19 lenkt.

Der erzeugte Kühlluftstrom durch die Flusssperrabschnitte 14, 15, 16 kann grundsätzlich durch Wellenlüfter 22 und/oder externe Lüfter bereitgestellt werden.

Durch die erfindungsgemäße Ausgestaltung der synchronen Reluktanzmaschine 20 mit einem Frequenzumrichter und den damit verbundenen höheren Leistungsfaktor dieser dynamoelektrischen Maschine kann diese auch als schnelldrehender Generator in einer Windkraftanlage eingesetzt werden, die durch Anordnung eines Wärmetauschers 17 in ihrem Temperaturverhalten optimiert werden kann.

Unter Blechpaketen oder Teilblechpaketen 30, 31, 32, 33 sind auch einstückige massive Teile zu verstehen, die ebenfalls eine magnetische Leitfähigkeit aufweisen.

Je nach den gestellten Anforderungen im industriellen Umfeld der synchronen Reluktanzmaschine 20 oder bei der Energieerzeugung durch die synchrone Reluktanzmaschine 20 wird insbesondere der Reluktanzläufer mit denjenigen Blechen, Zwischenelementen 7 oder Schottelementen 11 ausgestattet, die den besten Leistungsfaktor gewährleisten. Es ist also eine "Mischung" der oben genannten Ausführungen von Blechen, Zwischenelementen 7 und Schottelementen 11, bei ein- und zweiflutigen Maschinen aber auch bei anderen Kühlkonzepten möglich.

Die Zwischenelemente 7, die im axialen Verlauf noch Flusssperren aufweisen und nicht bereits in Kühlspalte 6 "übergegangen" sind, können ebenso mit Permanentmagneten 22 gemäß Anordnungen wie in FIG 3 bis FIG 12 ausgestattet sein.

Als Permanentmagnete 22 sind beispielsweise NdFeB, SaCO oder Ferrite einsetzbar. Die NdFeB-Magnete erlauben hohe Flussdichten während die Ferritmagnete vergleichsweise kostengünstig sind.

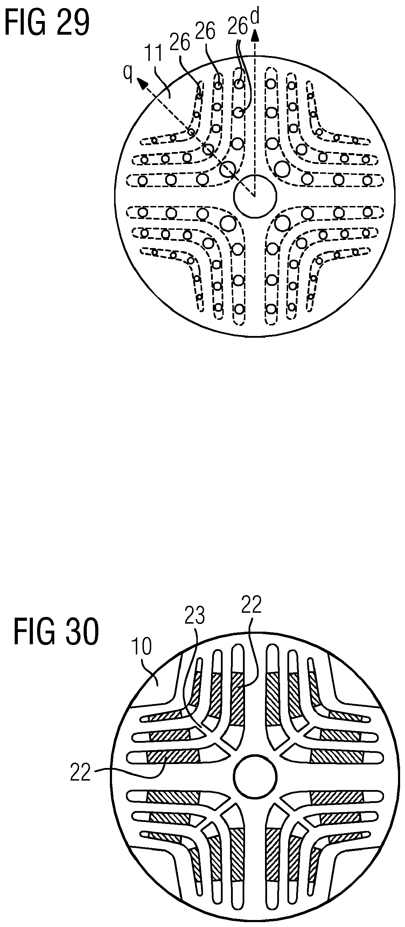

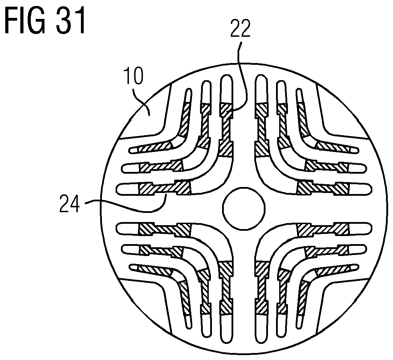

Da auf die Flussleitabschnitte 8 hohe Zentrifugalkräfte wirken, werden zumindest einer oder mehrere Flusssperrabschnitte 14, 15, 16 durch Stege 23 gemäß FIG 30 unterbrochen. Permanentmagnete 22 können diese Funktion ebenfalls ausführen, indem sie einen Formschluss zwischen den radial übereinander angeordneten benachbarten Flussleitabschnitten 8 herstellen. So kann der Formschluss beispielsweise durch eine Schwalbenschwanzverbindung gemäß FIG 31 hergestellt werden. Es sind auch Kombinationen der Ausführungen gemäß FIG 30 und FIG 31 vorstellbar um erhöhte Zentrifugalkräfte aufnehmen zu können.

Außerdem ist es vorteilhaft, die Permanentmagnete 22 nicht nur als starre Elemente in die Flusssperrabschnitte einzusetzen sondern auch als Suspension, die als zähflüssige Masse erst in den Flusssperrabschnitten 14, 15, 16 aushärtet, diese optimal ausfüllt und somit auch einen Formschlusss generiert.

## Patentansprüche

1. Synchrone Reluktanzmaschine (20), insbesondere Motor oder Generator mit einer Leistung größer 300kW, mit einem Stator (1) und einem durch einen Luftspalt (19) beabstandeten, um eine Achse (18) drehbar gelagerten Rotor (3), dessen axial hintereinander angeordneten Bleche jeweils eine anisotropische magnetische Struktur aufweisen, die durch Flusssperrabschnitte (14,15,16) und Flussleitabschnitte (8) gebildet ist und wobei die Flusssperrabschnitte (14,15,16) und Flussleitabschnitte (8) Pole des Rotors (3) bilden, wobei diese Flusssperrabschnitte (14,15,16) axial verlaufende Kanäle bilden, wobei in zumindest einigen Flusssperrabschnitten (14, 15,16) Permanentmagnete vorgesehen sind, die den jeweiligen Flusssperrabschnitt (14,15,16) nicht komplett belegen und somit in allen Flusssperrabschnitten (14,15,16) eine axiale Luftströmung ermöglichen, wobei das Blechpaket des Rotors (3) axial in zumindest zwei Teilblechpakete (30,31,32,33) unterteilt ist, wobei in Umfangsrichtung betrachtet jeweils zwischen den Polen im Bereich der q-Achse und axial betrachtet zwischen den Teilblechpaketen (30,31,32,33) radiale Kühlspalte (6) vorhanden sind.

2. Synchrone Reluktanzmaschine (20) nach Anspruch 1, **dadurch gekennzeichnet, dass** die Permanentmagnete innerhalb ihres jeweiligen Flusssperrabschnitts (14,15,16) symmetrisch zu q-Achse angeordnet sind.

3. Synchrone Reluktanzmaschine (20) nach Anspruch 1 oder 2, **dadurch gekennzeichnet, dass** bei mehreren Flusssperrabschnitten (14,15,16) radial übereinander, die Permanentmagnete (22) radial übereinander angeordnet sind.

4. Synchrone Reluktanzmaschine (20) nach einem der vorhergehenden Ansprüche, **dadurch gekennzeichnet, dass** Permanentmagnete innerhalb der Flusssperrabschnitte (14,15,16) mit dem umgebenden Blech eine Formschluss bilden.

5. Synchrone Reluktanzmaschine (20) nach einem der vorhergehenden Ansprüche, **dadurch gekennzeichnet, dass** die radiale Erstreckung der Kühlspalte (6) vom Luftspalt (19) aus betrachtet höchstens dem radialen Abstand des jeweiligen Flusssperrabschnitts (14,15,16) zum Luftspalt (19) entspricht.

6. Synchrone Reluktanzmaschine (20) nach einem der vorhergehenden Ansprüche, **dadurch gekennzeichnet, dass** der radiale Kühlspalt (6) zwischen zumindest zwei Teilblechpaketen des Rotors (3) durch Zwischenelemente (7) gebildet ist.

7. Synchrone Reluktanzmaschine (20) nach einem der vorhergehenden Ansprüche, **dadurch gekennzeichnet, dass** die Anzahl der radialen Kühlspalte (6) zumindest n-1 ist, wobei n die Anzahl der Teilblechpakete des Rotors (3) ist.

8. Synchrone Reluktanzmaschine (20) nach einem der vorhergehenden Ansprüche, **dadurch gekennzeichnet, dass** der Stator (1) radiale Kühlschlitze (5) aufweist, die zumindest abschnittsweise radial über den Kühlspalten (6) des Rotors (3) positioniert sind.

9. Synchrone Reluktanzmaschine (20) nach einem der vorhergehenden Ansprüche, **dadurch gekennzeichnet, dass** die Kühlspalte (6) Elemente zur Führung eines axial und/oder radialen Kühlstroms im Rotor (3) aufweisen.

10. Synchrone Reluktanzmaschine (20) nach einem der vorhergehenden Ansprüche, **dadurch gekennzeichnet, dass** die Zwischenelemente (7) in den radialen Kühlspalten (6) des Rotors (3) derart gestaltet sind, dass im Betrieb der synchronen Reluktanzmaschine (20) eine Lüfterwirkung in radialer und/oder axialer Richtung zumindest unterstützt wird.

11. Windkraftanlage mit zumindest einem Generator, der als Reluktanzmaschine (20) nach einem der vorhergehenden Ansprüche ausgeführt ist, wobei der Generator mit einem Frequenzumrichter in elektrisch leitfähiger Verbindung steht und/oder Kühlluftströme den Generator und/oder Frequenzumrichter durchströmen, wobei innerhalb oder an einer Gondel der Windkraftanlage ein Wärmeaustauscher (17) vorgesehen ist.
